Europäisches Patentamt

European Patent Office

Office européen des brevets

(19)

(11) **EP 0 581 009 B1**

(12) **EUROPÄISCHE PATENTSCHRIFT**

(45) Veröffentlichungstag und Bekanntmachung des Hinweises auf die Patenterteilung:
**02.09.1998 Patentblatt 1998/36**

(51) Int Cl.$^6$: **C08F 220/18**, C08L 101/00
// (C08L101/00, 57:06)

(21) Anmeldenummer: **93109715.8**

(22) Anmeldetag: **17.06.1993**

(54) **Thermoplastische Polymerzusammensetzung mit polymerem Verarbeitungshilfsmittel**

Thermoplastic polymer composition with polymeric processing agent

Composition de polymères thermoplastiques contenant un agent polymérique facilitant la mise en forme

(84) Benannte Vertragsstaaten:
**AT BE DE ES FR GB GR IT NL PT**

(30) Priorität: **23.06.1992 DE 4220453**

(43) Veröffentlichungstag der Anmeldung:
**02.02.1994 Patentblatt 1994/05**

(73) Patentinhaber: **Agomer Gesellschaft mit beschränkter Haftung**
**63457 Hanau (DE)**

(72) Erfinder:
• **Schüll, Volker, Dr.**
**W-8755 Alzenau/Ufr. (DE)**
• **Arnoldi, Detlef Dr.**
**W-6719 Weisenheim am Berg (DE)**

(74) Vertreter: **Weber, Wolfgang et al**
**Degussa AG**
**Fachbereich Patente**
**Postfach 1345**
**63403 Hanau (DE)**

(56) Entgegenhaltungen:
EP-A- 0 058 229          FR-A- 2 125 989
GB-A- 971 673            JP-A- 55 164 209
US-A- 2 737 502          US-A- 2 868 763
US-A- 3 705 137

• CHEMICAL ABSTRACTS, vol. 114 Columbus, Ohio, US; abstract no. 44243h, HOSAKA ET AL 'vinyl chloride polymer compositions containing heat stabilizers with excellent fluidity and plasticizer absorption' & JP-A-2 077 462 (DENKI KAGAKU KOGYO KK) 16. März 1990
• POLYMER JOURNAL Bd. 20, Nr. 8, 1988, TOKYO JP Seiten 693 - 698 HIRABAYASHI, KIKUTA, KASABOU, YOKOTA 'Main-chain Flexibility and Side-chain Crystallization of widely spaced Comb-like Polymers'
• PATENT ABSTRACTS OF JAPAN vol. 8, no. 241 (C-250)(1678) & JP-A-59 122 509 ( MITSUBISHI RAYON KK ) 16. July 1984
• GÄCHTER, MÜLLER 'Handbuch der Kunststoff-Additive' 1979, HANSER, MÜNCHEN DE Kapitel 7; K.-D. Böhme, "Hochpolymere PVC-Verarbeitungshilfsmittel"

EP 0 581 009 B1

**Beschreibung**

Die Erfindung betrifft eine thermoplastische Polymerzusammensetzung, die ein Verarbeitungshilfsmittel enthält. Teil der Erfindung sind auch aus der Polymerzusammensetzung hergestellte Formteile sowie ein Verfahren zum Verarbeiten eines thermoplastischen Polymers.

Thermoplastische Polymere, wie z. B. PVC, enthalten praktisch immer Verarbeitungshilfsmittel, die dem Thermoplasten verbesserte physikalische Eigenschaften verleihen. Je nach Zusammensetzung des Thermoplasten wird durch die Verarbeitungshilfsmittel erst eine Verarbeitung desselben möglich. So bewirken die Verarbeitungshilfsmittel bessere Bearbeitungseigenschaften, das Schmelz- und Fließverhalten wird verbessert, das Polymer und gegebenenfalls zugesetzte Additive, wie Stabilisatoren, äußere und innere Gleitmittel, Pigmente, Füllstoffe, Haftvermittler, Co-Stabilisatoren, Schlagzähmacher, Weichmacher usw. lassen sich besser und schneller homogenisieren.

Insbesondere weichmacherfreies Polyvinylchlorid (PVC) wird häufig zu Formteilen verarbeitet, wie z. B. Platten, Folien, Röhren, Schaumteilen und Formkörpern der verschiedensten Gestalten. Gerade PVC ist dabei jedoch, ohne Verarbeitungshilfsmittel schwer zu verarbeiten, da der Thermoplast vor dem Erreichen des Schmelzzustandes schon zu Zersetzungen neigt. Aus diesem Grunde sind seit langer Zeit Verarbeitungshilfsmittel bekannt und im Einsatz, die bei PVC und anderen Thermoplasten die Verarbeitungs- und Gleiteigenschaften verbessern sollen. So beschreibt z. B. die DE-OS 19 18 893 für diverse Thermoplaste geeignete Verarbeitungshilfsmittel auf Polyacrylatbasis, wobei ein Copolymerisat aus länger- und kürzerkettigen Alkylacrylaten dem Verarbeitungshilfsmittel Gleiteigenschaften verleiht. Es handelt sich hierbei um ein kautschukartiges Polymerisat mit ungünstigen Handling-Eigenschaften, das Produkt neigt bei einem Konzentrationsprozeß, z. B. Sprühtrocknung, zum Verkleben und kann daher nur in seiner Lösung eingesetzt werden. Die gleichen Probleme bereitet auch ein in der DE-OS 21 23 384 beschriebenes Verarbeitungshilfsmittel für PVC-Polymere, das im wesentlichen Acrylester mit $C_4$- bis $C_8$-Alkoholen und bis zu 9 Gew.-% Acrylnitril enthält. Das beschriebene Verarbeitungshilfsmittel wird durch Polymerisation von Monomeren in Fettalkoholen dargestellt, die den Thermoplasten später die nötigen Gleiteigenschaften zur Verarbeitung auf Kalanderwalzen geben sollen.

Ein ähnliches Verarbeitungshilfsmittel ist aus der GB-PS 981 116 bekannt, das aus einem Copolymerisat aus Methacrylaten mit kurzem Alkohol und Acrylateinheiten mit etwas längeren Alkoholen besteht. In PVC sind hinsichtlich der Acrylatkomponente nur die kurzen Alkohole ($C_1$ - $C_4$) erwünscht, da sonst das Verarbeitungshilfsmittel mit dem Thermoplasten unverträglich wird.

Kurzkettige Verarbeitungshilfsmittel auf PMMA-Basis sind aus der GB-PS 1 347 287 bekannt. Diese kurzkettigen Polyacrylate dienen als Fließverbesserer, für PVC-Verarbeitungen auf Kalander-Walzen sind sie jedoch weniger geeignet, da ein zu schnelles Anbacken des Thermoplasten an den Kalander-Walzen auftritt.

Ein weiteres Verarbeitungshilfsmittel für PVC ist aus der US-PS 2,868,763 bekannt, dessen Aufgabe es ist, möglichst verträglich mit dem PVC zu sein. Hierzu wird ein Copolymer aus überwiegend Vinylchlorid und einem geringeren Anteil an Acrylaten hergestellt, wobei insbesondere Acrylester mit einer Kettenlänge von 6 - 10 C-Atomen im Alkohol verwendet werden. Die hiermit erhaltenen thermoplastischen PVC-Mischungen können nur bis Temperaturen um etwas über 200°C verarbeitet werden, da der hohe PVC-Anteil im Verarbeitungshilfsmittel der thermoplastischen Mischung nicht genügend Thermostabilität verleihen kann.

Wegen der oben beschriebenen Schwierigkeiten werden in den Patenten bzw. Offenlegungsschriften DE 16 94 409, 21 35 024, 41 25 477, US 4,436,861, EP 0 061 134, 0 184 851 und 0 367 198 mehrstufige Verarbeitungshilfsmittel beschrieben. Im einfachsten Fall (DE 16 94 409, die eine Verbesserung gegenüber der GB-PS 981 116 darstellt) wird dabei von einer PVC-Suspension ausgegangen, auf die eine Mischung aus Alkylmethacrylaten und Alkylacrylaten mit unterschiedlicher Länge der Alkylgruppen aufpolymerisiert wird. Die so hergestellten Verarbeitungshilfsmittel benötigen erhebliche Mengen an einem äußeren Gleitmittel, das die zu verarbeitende Schmelze des Thermoplasten von den Wandungen der verwendeten Verarbeitungsmaschinen trennen soll. Wird zu wenig von dem äußeren Gleitmittel eingesetzt, dann läßt sich die Schmelze, z. B. von Kalander-Walzen, schon nach kurzer Zeit nicht mehr trennen, wobei Zersetzung an der Walze eintritt. Die äußeren Gleitmittel haben jedoch den Nachteil, daß sie aufgrund ihrer Unverträglichkeit mit dem thermoplastischen Polymer ausschwitzen und Beläge auf den Wandungen der Verarbeitungsmaschinen hinterlassen.

Außerdem verlängern die äußeren Gleitmittel die Gelierzeit des Thermoplasten erheblich, d. h. die Zeitdauer zwischen Mischungsbeginn und Bilden einer homogenen Schmelze des Thermoplasten wird erheblich verlängert.

Zur Reduzierung der notwendigen Menge an äußerem Gleitmittel wird in der DE 21 35 024 C2, der US-A 4,436,861 und den europäischen Schriften ein mehrphasiges Acryl-Verbundpolymer vorgeschlagen, das überwiegend eine weiche Acrylatphase mit längerkettigen Alkylresten neben einer umhüllenden harten Phase enthält. Gemäß der US-Schrift wird das Acryl(co)polymer sogar auf das Grundpolymer (PVC) aufgepfropft. Die harte Phase wirkt dabei vermutlich als Verarbeitungshilfsmittel, d. h. sie beeinflußt die Viskosität und Gelierzeit sowie gebenenfalls auch den Glanz und andere Eigenschaften des thermoplastischen Polymers, die weiche Phase hat hingegen vermutlich den Effekt eines äußeren Gleitmittels, wobei hierbei der Vorteil auftritt, daß dieses "Gleitmittel" je nach Zusammensetzung des Verarbeitungshilfsmittels mit dem thermoplastischen Polymer verträglich sein kann, so daß bei der Verarbeitung der Schmelze das Ausschwitzen und die damit verbundene Belagsbildung reduziert ist. Durch die harte Polymerschale wird der weiche Kern nach außen isoliert, so daß die mehrschaligen Verarbeitungshilfsmittel nicht mehr zum Verkleben neigen und entsprechend sprühgetrocknet werden können. Diese Verarbeitungshilfsmittel können daher leichter in die thermoplastischen Polymere eingearbeitet werden. Nachteilig ist bei den mehrschaligen Polymeren, daß zur Erzielung einer akzeptablen Gleitmittelwirkung unter Beibehaltung der Eigenschaften des Verarbeitungshilfsmittels das Herstellungsverfahren und die Zusammensetzung bis hin in kleinste Details wie z. B. Kettenregler oft genauestens abgestimmt sein muß, so daß schon kleinere Varianten in Zusammensetzung oder Verfahren zu einem Produkt mit minderwertigen Eigenschaften führen. Grundsätzlich ist hierbei, wie auch bei der allgemeinen Verwendung von äußeren Gleitmitteln, ein Kompromiß zwischen den Ablöseeigenschaften von den Maschinenwandungen und der Gelierzeit notwendig, da mit der besseren Gleitmittelwirkung auch die Gelierzeit deutlich verlängert wird. Im Extremfall kann sogar das Gelieren ausbleiben.

Aus der JP-A-55 164 209 sind gleitfähige thermoplastische Harzzusammensetzungen bekannt, die auf 100 Gew.-Teile des thermoplastischen Kunststoffs 0,1 bis 5 Gew.-Teile eines Copolymeren aus a) 60 bis 90 Gew.-% eines oder mehrerer Monomere aus der Gruppe Acrylsäure, Methacrylsäure, Acrylsäureester mit Alkylgruppen mit 1 bis 2 Kohlenstoffatomen und Methacrylsäureestern mit Alkylgruppen mit 1 bis 2 Kohlenstoffatomen und b) 40 bis 10 Gew.-% eines oder mehrerer Monomere aus der Gruppe Acrylsäureester mit Alkylgruppen mit 11-20 Kohlenstoffatomen und $\alpha$-substituierter Acrylsäureester mit Alkylgruppen mit 11-20 Kohlenstoffatomen, mit a) und b) als Hauptmonomereinheiten, enthalten, wobei das mittlere Molekulargewicht des Copolymeren über 5.000 und unter 100.000 liegt. Beim Copolymer gemäß der JP-A-55 164 209 handelt es sich um ein Perl- oder Suspensionspolymerisat.

Aufgabe der vorliegenden Erfindung ist eine thermoplastische Polymerzusammensetzung, deren Verarbeitungshilfsmittel gute äußere Gleitmittelwirkung bei kurzen Gelierzeiten zeigen soll. Außerdem soll das Blend - wie auch das Verarbeitungshilfsmittel - einfach in der Herstellung und Handhabung und damit kostengünstig sein.

Diese Aufgabe wird gelöst mit einer thermoplastischen Polymerzusammensetzung gemäß Anspruch 1.

Die neuen thermoplastischen Formmassen enthalten neben einem thermoplastischen Polymer aus der Gruppe Polyvinylchlorid, Polyvinylidenchlorid, nachhalogeniertes Polymer und Copolymer auf Basis eines dieser Polymere noch ein Copolymer, das vom thermoplastischen Polymer verschieden ist, das als Grundbaustein ein Monomer, das als Homopolymerisat eine Glasübergangstemperatur ($T_g$) $\geq$ 65 °C hat, und zu mindestens 3 Gew.-% bis weniger als 75 Gew.-%, vorzugsweise max. 70 Gew.-%, ein Comonomer enthält, das eine $C_{10}$-$C_{22}$-Alkylkomponente hat. Zugleich kennzeichnen sich die thermoplastischen Formmassen dadurch, daß der Anteil der $C_{10}$-$C_{22}$-Alkylkomponente eine Transmission des Copolymeren von höchstens 90 % (560 nm, 1 cm) in Ethylacetat bei einer 10%igen (Gew./Gew.) Lösung bewirkt und daß das Copolymer durch Emulsionspolymerisation erhalten wird. Unter Homopolymerisat wird hierbei ein Homopolymerisat mit einem so hohen Molekulargewicht verstanden, daß sich bei einer weiteren Erhöhung des Molekulargewichtes praktisch keine Veränderung der $T_g$ mehr ergibt. Bei Methylmethacrylat als Monomer wird dies bei einem Polymerisat mit einem Molekulargewicht ($M_W$) von ca. 100.000 erreicht.

Üblicherweise ist das Comonomer zu weniger als 60 % im Copolymer enthalten, besonders bevorzugt sind 10 bis 40 Gew.-%. Von den Copolymeren sind solche ausgenommen, die als Monomer Vinylchlorid und als Comonomer Acrylsäure-$C_8$-$C_{16}$-ester enthalten, sofern sie in PVC eingesetzt sind.

Das Comonomer wird vorzugsweise ausgewählt aus der Gruppe (Meth)acrylsäure-$C_{10}$-$C_{22}$-ester, Vinyl-$C_{10}$-$C_{22}$-ether, Vinyl-$C_{10}$-$C_{22}$-ether, $C_{10}$-$C_{22}$-Alkylamido(meth)acrylate. Insbesondere die Methacrylsäureester sind hierbei bevorzugt, da diese mit thermoplastischen Polymeren, wie z. B. PVC o. ä. die beste Verträglichkeit haben. Besonders bevorzugt sind außerdem solche Ester bzw. Ether, die mindestens 10 C-Atome in Reihe haben. Beste Ergebnisse wurden mit Alkylkomponenten zwischen 10 und 16 C-Atomen und insbesondere mit 12 - 14 C-Atomen erzielt, wobei lineare Ketten wiederum bevorzugt sind.

Das Monomer, das die Grundbausteine im Copolymer bildet, hat vorzugsweise als Homopolymerisat eine $T_g \geq$ 80°C. Weiterhin ist es vorteilhaft, wenn das ganze Copolymer eine $T_g \geq$ 40°C insbesondere $\geq$ 50°C hat. Durch die hohe $T_g$ des Homopolymerisats des Monomeren wird eine gute Wirkung des Copolymers als Verarbeitungshilfsmittel erreicht, wobei die angegebenen Glastemperaturen des Copolymeren dies unterstützen und außerdem den Herstellungsprozeß, das Handling und Einarbeiten des Copolymeren in die Formmasse vorteilhaft beeinflußen.

Die angegebenen $T_g$-Werte ermöglichen auch, daß die erfindungsgemäßen Copolymeren durch Sprühtrocknen der entsprechenden Polymerdispersionen isoliert werden können.

Das Monomer, das als Homopolymerisat eine Glasübergangstemperatur $\geq$ 65°C hat, wird vorteilhaft ausgewählt aus der Gruppe Methylmethacrylat, (Meth)acrylnitril, Styrol, $\alpha$-Methylstyrol, (Meth)acrylamid, Vinyltoluol, wobei Methylmethacrylat besonders bevorzugt ist, da es verhältnismäßig preiswert und beste Verträglichkeit mit dem thermoplastischen Polymer, wie z. B. PVC o. ä., hat.

Vorteilhaft hat das Copolymer ein Molekulargewicht $M_W$ von $\geq$ 100 000, vorzugsweise $\geq$ 300 000 und ist vorzugsweise ein Thermoplast.

Das Molekulargewicht kann z. B. mit Size Exclusion Chromatography (SEC) in an sich bekannter Weise ermittelt werden. Die hier angegebenen Molekulargewichte wurden mit einem Gerät von Spectra Physics ermittelt. Säulenkombination: PL-GEL M; 1 = 30 cm, Innendurchmesser = 7,5 mm; Fluss: 1,2 ccm THF/Min.; Druck: 2900 psi; Einwaage: 38 mg Substanz in 15 ccm THF. Das Molekulargewicht wurde mittels 19 Polystyroleichstandards und Korrekturfaktoren für die Zusammensetzung des erfindungsgemäßen Polymeren bestimmt. Molekulargewichtsbereich von M = 162 bis M = 7.000.000.

Die erfindungsgemäß eingesetzten Copolymere enthalten lange Alkylseitenketten entsprechend dem Polymerisationsverfahren statistisch verteilt in einem Grundgerüst mit kurzen Seitenketten. Die langen Alkylseitenketten werden bevorzugt durch Monomere wie Decylmethacrylat, Laurylmethacrylat, Stearylmethacrylat und entsprechenden Mischungen (z B. Methacrylsäure-$C_{10}$-$C_{14}$-ester) gebildet. Die Copolymerisation erfolgt in an sich bekannter Weise, durch Emulsionspolymerisation. Die Emulsionspolymerisation und anschließende Sprühtrocknung ist bevorzugt.

Ähnliche Copolymerisate sind u. a. schon als Schmieröladditive (bevorzugt mit sehr langen Alkylseitenketten) und auch als textile Gleitmittel (DE 39 39 549 A1) (bevorzugt mit kürzeren Alkylseitenketten) bekannt. So beschreibt US-A 5,112,509 Schmiermittel-Additive auf Basis Laurylmethacrylat/Methylmethacrylat, wobei der Laurylmethacrylat-Anteil so hoch gewählt ist, daß das erhaltene Copolymer eine $T_g$ weit unter 0°C hat. Mit ca. 80 bis 90 Gew.-% Laurylmethacrylat im Copolymer zeigt dieses eine gute äußere Gleitmittelwirkung, jedoch keine weiteren Eigenschaften als Verarbeitungshilfsmittel. US-A 4,756,843 beschreibt ebenfalls ein Öl-Additiv, das nicht zum Einsatz in Polymermischungen vorgesehen ist. Das beschriebene Copolymer hat aufgrund seiner Zusammensetzung mit sehr hohem längerkettigen Alkylmethacrylat-Anteil eine sehr niedrige Glastemperatur. Auch dieses Produkt ist lediglich als Gleitmittel und nicht als weiteres Verarbeitungshilfsmittel brauchbar.

Die erfindungsgemäßen Copolymere lassen sich vorteilhaft mit thermoplastischen Polymeren, die anders als das Copolymer aufgebaut sind, verarbeiten, wobei das Copolymer ausgezeichnete Eigenschaften als Gleit- und Verarbeitungshilfsmittel hat. Bevorzugte Thermoplaste sind Polyvinylchlorid, Polyvinylidenchlorid, nachhalogenierte Polymere sowie Copolymere, enthaltend überwiegend Vinylchlorid oder Vinylidenchlorid, z. B. mit Vinylacetat. Hierbei stellte es sich bei den erfindungsgemäßen Polymeren als besonders vorteilhaft und überraschend heraus, daß allein durch kleine Veränderungen bzw. durch eine Auswahl bestimmter Monomere bzw. durch die Wahl bestimmter, vom Fachmann leicht einstellbarer Eigenschaften im Copolymer gegenüber den ähnlichen bekannten (eingangs beschriebenen) Copolymerzusätzen, die z. B. in PVC eine äußere Gleitmittelwirkung zeigen, ein völlig andersartig wirkendes Copolymer erhältlich ist, das neben seinen vorteilhaften Gebrauchseigenschaften (einfache Herstellung sowie problemlose Konfektionierung und Dosierung) noch völlig neue und überraschende Wirkungen beim Einsatz in anderen Polymeren hat. So zeigen die mit längerkettigen Copolymeren hergestellten bekannten PVC-Zusätze zwar eine gute äußere Gleitmittelwirkung, führten aber zu einer Verlängerung der Gelierzeit (vgl. auch Beispiel 4). Dieser negative Effekt konnte bisher nur durch Zugabe von anderen Verarbeitungshilfsmitteln oder durch Einsatz von mehrschaligen Verarbeitungshilfsmitteln ausgeglichen werden, wobei ein mehrschaliges Verarbeitungshilfsmittel eine Kombination verschiedener (Co)polymere ist, mit einem (Co)polymer, das eine äußere Gleitmittelwirkung zeigt und einem anderen (Co)polymer, das üblicherweise in der Schale ist und die Gelierzeit verkürzt.

Das erfindungsgemäße Produkt ist hingegen vorteilhaft ein einziges Copolymer, das z. B. in PVC einerseits Wirkung als äußeres Gleitmittel zeigt und (!) zugleich zur Verkürzung der Gelierzeit führt. Das erfindungsgemäße Copolymer übertrifft dabei alle bekannten Produkte, die durch Kombination unterschiedlicher Polymere und/oder Copolymere, sei es getrennt oder in Form von mehrschaligen Copolymeren, geeignet sind, mehr oder weniger die oben beschriebenen gegenläufigen Effekte auszugleichen.

Gewöhnlich werden auf 100 Gew.-Teile thermoplastisches Polymer 0,1 - 20 Gew.-Teile des Copolymeren eingearbeitet, wobei 0,8 und bis zu 5 Gew.-Teile Copolymer bevorzugt sind.

Vorzugsweise ist das Copolymer ein Thermoplast und liegt gewöhnlich nicht als Block oder Pfropfpolymerisat vor. Die typische Struktur des Copolymer ist kammartig. Vorzugsweise wird das Copolymer einschalig, d. h. in einem einstufigen Verfahren, hergestellt, d. h. ohne zusätzliche Polymerschalen oder -kerne, u. U. kann das Copolymer aber auch mit oder auf andere Polymere gepfropft sein.

Bevorzugt sind die homogenen Copolymeren, die die einzelnen Monomeren statistisch verteilt enthalten. Grundsätzlich werden die Copolymeren bevorzugt ohne Polymerschalen eingesetzt. Diese Copolymeren sind einfach und damit preiswert herzustellen, leicht mit einem thermoplastischen Polymer zu verarbeiten und zeigen ausgezeichnete Ergebnisse. Zusätzliche Verarbeitungshilfs- und Gleitmittel können reduziert werden bzw. sind ganz überflüssig. Solche Eigenschaften konnten bislang nur mit mehrstufig hergestellten Verarbeitungshilfsmitteln, insbesondere mit mehrphasigen Acryl-Verbundpolymeren, wie sie in der DE 21 35 024 C2 beschrieben sind, erreicht werden, wobei die erfindungsgemäßen Copolymerisate solche Kernschaleprodukte in ihrer Wirksamkeit noch übertreffen.

Aus den thermoplastischen Formmassen können vorteilhaft geformte Artikel hergestellt werden, wobei insbesondere Folien oder Gegenstände, die in einem Verbund mit einer solchen Folie vorliegen, bevorzugt sind.

Zur im Rahmen der Erfindung einsetzbaren Copolymeren gehören auch Copolymere, die als Grundbausteine einen (Meth)acrylsäureester und ein weiteres Monomer enthält, wobei der (Meth)acrylsäureester im Copolymer zu mindestens 3 Gew.-% vorliegt und als Methacrylsäureester eine $C_8$-$C_{22}$-, vorzugsweise eine $C_{10}$-$C_{16}$-Alkoholkompo-

nente und als Acrylsäureester eine $C_{11}$-$C_{22}$-, vorzugsweise eine $C_{11}$-$C_{16}$-Alkoholkomponente enthält. Das weitere Monomer hat als Homopolymerisat eine $T_g \geq 65°C$ und das erfindungsgemäße Copolymer eine $T_g \geq 40°C$. Das Copolymer liegt homogen vor, d. h. es ist nicht gepfropft und hat keine Pfropfungen und ist erhältlich durch gemeinsame Polymerisation der entsprechenden Monomere.

Zur Erfindung gehört auch ein Verfahren zur Verarbeitung eines thermoplastischen Polymers, bei welchem Polyvinylchlorid, Polyvinylidenchlorid, nachhalogeniertes Polymer oder ein Copolymer auf Basis dieser Polymere mit einem Gleit- und Verarbeitungshilfsmittel innig zu einer thermoplastischen Formmasse vermischt und diese in Form gebracht wird, wobei als Gleit- und Verarbeitungshilfsmittel ein Copolymer eingesetzt wird, wie es in der erfindungsgemäßen Formmasse beschrieben ist.

Vorzugsweise erfolgt das Vermischen unter Temperaturerhöhung und Schmelzen des Polymers und erfolgt insbesondere auf einem Walzenstuhl oder in einem Extruder.

Die erfindungsgemäß einsetzbaren Copolymere haben allgemein einen so hohen Anteil längerer Alkylgruppen, daß die Löslichkeit des Copolymers in Essigsäureethylester beeinträchtigt ist. Bekannte Copolymere (z. B. GB-PS 981,116), die insbesondere als Verarbeitungshilfsmittel eingesetzt werden, sind üblicherweise mit Essigsäureethylester praktisch beliebig mischbar. Die erfindungsgemäß verwendbaren Copolymere bewirken hingegen aufgrund ihres höheren unpolaren Alkylanteils eine Trübung. Tabellen 1 und 2 zeigen dieses Trübungsverhalten bei steigender Kettenlänge bzw. steigendem Anteil des langkettigen Comonomeren, gemessen mit Universal-Meßeinheit UME 3 (Fa. Dr. Lange); Zelle Transparenz-Meßkopf LT 12, Filter VG 9 grau, Wellenlänge 560 nm (grünes Flankenfilter), freie Weglänge der Küvette 10 mm.

Tabelle 1:

| Copolymer (10 % (Gew./Gew.) in Ethylacetat) | Viskositätszahl (ccm/g) | Transmission (%) |
|---|---|---|
| MMA/n-BMA (20 Teile n-BMA) | 350 | 96 |
| MMA/n-LMA (20 Teile n-LMA) | 303 | 31 |
| MMA/n-SMA (20 Teile n-SMA) | 192 | 1 |
| BMA = Butylmethacrylat LMA = Laurylmethacrylat SMA = Stearylmethacrylat | | |

Tabelle 2 :

| Copolymer (10 % (Gew./Gew.) in Ethylacetat | Viskositätszahl (ccm/g) | Transmission (%) |
|---|---|---|
| MMA/LMA ( 3 Teile LMA) | 244 | 76 |
| MMA/LMA ( 5 Teile LMA) | 238 | 65 |
| MMA/LMA (10 Teile LMA) | 208 | 49 |
| MMA/LMA (20 Teile LMA) | 303 | 31 |
| MMA/LMA (30 Teile LMA) | 199 | 23 |
| MMA = Methylmethacrylat LMA = Laurylmethacrylat | | |

Aus den Werten der Transmission geht hervor, daß mit zunehmender Länge der Seitenkette von n-Butyl, n-Lauryl zu n-Stearyl die Lösungen trüber werden. Das gleiche gilt für zunehmende Konzentration an langkettigem Comonomer. Auffällig ist, daß schon 3 Teile Laurylmethacrylat im Copolymer zu einer deutlichen Trübung führen, wo hingegen ein Copolymer mit 20 Teilen Butylmethacrylat glatt in Lösung geht. Bewirkt wird dies durch das Prinzip "Gleiches löst Gleiches", das polare Lösungsmittel Essigsäureethylester löst polare Polymere besser als unpolare. Mit zunehmender Länge der Seitenkette bzw. ab einer gewissen Länge der Seitenkette mit die zunehmendem Anteil des Comonomers im Copolymer werden die Copolymere unpolarer und schlechter löslich und ergeben trübe Lösungen. Die Abnahme der Polarität der Copolymere bei gleichzeitig einem Gehalt an oben definiertem, als Gundbaustein dienenden Monomer, das vorzugsweise polar ist, scheint entscheidend zu sein für die Wirkung der erfindungsgemäßen Polymere, nämlich deren Verwendbarkeit als Verarbeitungshilfsmittel mit zusätzlicher Wirkung als äußeres Gleitmittel. Das erfindungsgemäße Copolymer kann daher noch zusätzlich charakterisiert werden mit einer Transmission von höchstens 90 % bei 10 %iger (Gew./Gew.) Lösung in Ethylacetat. Bevorzugt sind Werte unter 85 % und insbesondere solche unter 80 %. Besonders geeignete Copolymere haben eine Transmission zwischen 50 % und 10 %, wobei Werte zwischen 20 % und 40 % für die besten Copolymere bestimmt wurden.

Mit der abnehmenden Transmission geht einher die Löslichkeit bzw. Trübungskonzentration der erfindungsgemäßen Copolymere in Ethylacetat. Tabelle 3 zeigt für einige Copolymere die Trübungskonzentration.

Tabelle 3 :

| Copolymer | Viskositätszahl (ccm/g) | Trübungskonzentration (g Copolymer/ 100g Essigester) | Bemerkungen |
|---|---|---|---|
| MMA/BMA (20 Teile BMA) | 319 | > 4,5 | klare Lösung |
| MMA/LMA (10 Teile LMA) | 208 | > 5,75 | schwach trüb |
| MMA/LMA (20 Teile LMA) | 303 | 2,0 | trüb |
| MMA/LMA (30 Teile LMA) | 199 | 2,0 | trüb |
| MMA/SMA (20 Teile SMA) | 192 | 0,5 | trüb |
| MMA = Methylmethacrylat<br>LMA = Laurylmethacrylat<br>SMA = Stearylmethacrylat | | | |

Wie bei den Tabellen 1 und 2 sinkt die Trübungskonzentration des Copolymers mit zunehmender Länge der Alkylkette und mit höherem Gehalt der langkettigen Alkylkomponente im Copolymer. Die erfindungsgemäßen Copolymere zeigen bei 10 %iger (Gew./Gew.) Lösung eine Trübung, bevorzugte Copolymere zeigen Trübungen bei unter 6 %igen, insbesondere unter 3 %igen Lösungen. Besonders bevorzugt sind Copolymere mit einer Trübungskonzentration von ca.

2 g Copolymer/100 g Essigester.

Die Erfindung wird im folgenden anhand von Beispielen näher erläutert:

Bestimmung der Glasübergangstemperatur ($T_g$)

$T_g$ ist die Abkürzung für "Glasumwandlungstemperatur"; häufig auch als Glastemperatur bezeichnet. Die Glasumwandlungstemperatur ist ein Temperaturbereich von 5 - 20°C in dem sich eine Polymerschmelze, die von höherer Temperatur allmählich abkühlt, glasartig erstarrt. Der Glaszustand ist im allgemeinsten Sinne der feste Zustand der makromolekularen Verbindungen, in den diese beim Abkühlen aus der Schmelze (kautschukelastischer Zustand) übergehen.

Anm.: Aus: Grundriß der makromolekularen Chemie Bd. IV, Makromolekulare Aggregatzustände, Bruno Vollmert, Seite 147.

Die hier benutzte Methode, die Glasumwandlungstemperatur zu messen, ist die Differential-Thermo-Analyse (DTA).

Das Messprinzip der DTA ist wie folgt:

(Aus: Werkstoffkunde der Kunststoffe; Georg Menges; Carl Hanser Verlag München Wien)

In einem linear aufheizbaren Ofen werden die Probe P und eine Inertsubstanz V untergebracht. Beide sind mit je einem Thermoelement versehen. Die Thermosonden sind einander entgegengesetzt geschaltet, so daß keine Thermospannung auftritt solange P und V gleiche Temperatur aufweisen:

$$DeltaT = T(P)-T(V)=0$$

Findet demgegenüber in der Probe, z. B. bei der Temperatur Tu, eine Umwandlung statt, so wird Wärme verbraucht oder freigesetzt und es gilt DeltaT ≠ 0.

Jetzt tritt eine Thermospannung auf, die registriert wird und Aussagen über Reaktionstemperatur Tu, Reaktionswärme Delta H, Reaktionsablauf und Glasumwandlungstemperatur ermöglicht.

Amorphe Polymere zeigen am Glasumwandlungspunkt $T_g$ einen Sprung in ihrer spezifischen Wärme, der mit Hilfe der DTA nachgewiesen werden kann. Eine solche Substanz zeigt im DTA-Diagramm nur eine Verschiebung der Nulllinie, die Höhe der Verschiebung ist proportional dem Sprung der spezifischen Wärme. Der Glaspunkt $T_g$ wird durch den Wendepunkt in der Kurve festgelegt. Die DTA-Messungen werden mit einem DTA-Gerät der Fa. Mettler, Typ: Messzelle DSC 30, durchgeführt.

Beispiel 1

Herstellung eines LMA/MMA-Copolymerisates

In 66,0 kg vollentsalztes Wasser einer Temperatur von 89°C gibt man 108,8 g Natriumperoxodisulfat. Unter Rühren wird eine Emulsion aus 61,0 kg vollentsalztem Wasser, 5,9 kg Diisooctylsulfosuccinat (75 %ige Lösung), 102,9 kg Methylmethacrylat, 44,1 kg Laurylmethacrylat und 27,2 g Natriumperoxodisulfat zudosiert. Unter Rühren und Zudosieren der Emulsion in 2 Stunden reagiert die Polymerisatmischung im Reaktor aus. Inertgasatmosphäre ist während des Versuches erforderlich. Die auspolymerisierte Dispersion wird sprühgetrocknet mittels Zerstäuberscheibe und Trocknungstemperaturen von 70 - 160°C. Man erhält ein feinteiliges gut rieselndes Pulver.

Auf gleiche Art und Weise können Copolymere aus MMA und LMA hergestellt werden, deren Gehalt an Laurylmethacrylat von 3 - 75 Gew.-% variiert sowie Copolymere aus Methylmethacrylat und Monomere wie Stearylmethacrylat, Decylmethacrylat, Stearylacrylat, Laurylacrylat, Ethylhexylmethacrylat.

Beispiel 2

2500,0 g Vinnol H 65 D (PVC-Pulver MG > 74 000), 150,0 g Omyalite 95 T (Kreide), 100,0 g Titandioxid Kronos Cl 220 und 125,0 g Stabilisatormischung Bäropan E 16435 FP werden im Fluid- oder Flügelmischer (Heiz-Kühl-Mischer) zu einem PVC-dryblend verarbeitet.

Man gibt die einzelnen Rohstoffe in den Mischer und läßt die Mischung bei hoher Drehzahl des Rühraggregates auf 120°C Massetemperatur erwärmen. Bei niedriger Drehzahl wird auf unter 40°C Massetemperatur abgekühlt und dann der Mischer entleert.

100 Gew.-Teile der so hergestellten Prüfrezeptur wurden mit 4 Teilen des erfindungsgemäßen Copolymeren durch Pulvermischen auf dem Rollenstuhl vermischt. Diese Mischung dient als Grundlage für spätere Beispiele und ist z. B. für PVC-Profile geeignet.

Beispiel 3

1000,0 g Vinnol H 60 D (PVC-Pulver MG 62 000), 30,0 g Okstan OM 100 (Stabilisatormischung), 5,0 g Gleitmittel Bärolub L-PL werden zusammen mit den in späteren Beispielen beschriebenen Copolymeren im Heiz-Kühl-Mischer (s. Beispiel 2) in PVC-dryblends überführt.

Diese Mischungen sind z. B. für PVC-Folien geeignet.

Mit den gemäß Beispiel 2 und 3 hergestellten PVC-dryblends werden Meßkneterexperimente (Plasticorder Typ PL 2000 und Typ PLE 330) bzw. Walzenstuhlexperimente (Collin-Walze) durchgeführt.

Meßkneterexperimente

Die nach Beispiel 2 hergestellten Pulvermischungen werden im Meßkneter (Fa. Brabender Typ PLE 330) bei einer Gehäusetemperatur von 170°C und einer Drehzahl der Knetschaufeln von 50 U/min geliert. Die nach Beispiel 3 hergestellten Pulvermischungen werden im Meßkneter (Fa. Brabender Typ PL 2000) bei einer Gehäusetemperatur von 130°C und einer Drehzahl von 50 U/min geliert. Gelieren bedeutet, daß die Pulvermischung unter dem Einfluß von Scherung und Wärme von pulvriger Konsistenz in ein kompaktes, festes Material überführt wird.

Wichtige Meßgrößen beim Gelieren von PVC-dryblends in Meßknetern sind die Gelierzeit und das Gleichgewichtsdrehmoment bei einer gegebenen Temperatur. Beim Gelieren des PVC-dryblends, der ein PVC-Verarbeitungshilfsmittel enthält, wird bei vorgegebenen Temperaturen und Drehzahlen das Drehmoment als Funktion der Zeit registriert. Die Zeit vom Meßbeginn bis zum Drehmomentmaximum ist die Gelierzeit. Das Drehmoment nach 10 Minuten Meßzeit ist das Gleichgewichtsdrehmoment und ist ein Maß für die Viskosität der PVC-Schmelze im Meßkneter.

Experimente mit dem Walzenstuhl

Experimente mit dem Walzenstuhl (Collin-Walze) werden durchgeführt, um die Gleitmitteleigenschaften des Produktes zu charakterisieren. PVC-Pulver gemäß Beispiel 3 wurden auf den Walzenstuhl gegeben, gewalzt und dabei geliert. Die Walzen des Walzenstuhls haben eine Temperatur von 200°C und eine Drehzahl von 30 U/min. Alle 5 Minuten wird eine Probe gezogen. Geprüft wird, wie lange die jeweilige Rezeptur auf der Walze gewalzt werden kann, bis es zum Ankleben auf der heißen Walzenoberfläche kommt. Je länger es dauert, bis die PVC-Schmelze auf der Walze anbackt, desto besser ist die Gleitmittelwirkung.

Die Ergebnisse sind in Tabelle 4 zusammengestellt.

Beispiel 4 (Vergleich)

Vergleich der Effekte eines PVC-Verarbeitungshilfsmittels mit Gleitmittelwirkung und eines PVC-Verarbeitungshilfsmittels ohne Gleitmittelwirkung

In ein Blend gemäß Beispiel 3 wurden 2 phr (entsprechend 2 Teile PVC-Verarbeitungshilfsmittel auf 100 Teile PVC-Pulver) eines PVC-Verarbeitungshilfsmittels mit Gleitmittelwirkung - ein zweistufiges Emulsionspolymerisat - (Paraloid K 175 von Rohm & Haas gemäß DE 21 35 024 C2) bzw. 2 phr eines PVC-Verarbeitungshilfsmittels ohne Gleitmittelwirkung - ein einstufiges Emulsionspolymerisat - (Paraloid K 120 N) eingearbeitet und auf dem Walzenstuhl verarbeitet. Die PVC-Rezeptur mit PVC-Verarbeitungshilfsmittel mit Gleitmittelwirkung verbleibt 28 Minuten auf dem Walzenstuhl, bis es zum Anbacken der Schmelze kommt. Beim PVC-Verarbeitungshilfsmittel ohne Gleitmittelwirkung backt die PVC-Schmelze bereits nach 10 Minuten auf den Walzenflächen an. Dies zeigt, daß PVC-VH mit Gleitmittelwirkung gegenüber PVC-VH ohne Gleitmittelwirkung die Neigung der PVC-Schmelze zum Anbacken auf heißen Metalloberflächen von Verarbeitungsmaschinen verringern.

Gleitmittel in PVC-Rezepturen können aber (vgl. "Plastifizierzeitmessungen an Hart-PVC-Pulvermischungen mit einem Brabender Plastographen", Sonderdruck aus "Kunststoffe und Gummi", Seite 4, Heft 4, 1965, hier: Montanwachs) noch in Konzentrationen von 0.3 % Gew. bis 2,0 % Gew. die Gelierzeit des PVC verlängern und die Viskosität erniedrigen. Das Verarbeitungshilfsmittel mit Gleitmittelwirkung zeigt gegenüber dem Verarbeitungshilfsmittel ohne Gleitmittelwirkung eine solche Gelierzeitverlängerung, die beträchtlich aber noch akzeptabel ist.

Beispiel 5

In die Rezeptur gemäß Beispiel 3 werden 2 phr eines Copolymeren an MMA/LMA (80 : 20) gemäß dem dort beschriebenen Verfahren eingearbeitet. Das Copolymere hat eine Viskositätszahl von 297 ccm/g. Die Viskositätszahl (im folgenden auch VZ) wird nach DIN 51562 bestimmt. Die VZ ist ein Maß für das Molekulargewicht von Polymeren. Je größer die VZ desto größer das Molekulargewicht.

Das Produkt hat eine Walzzeit von 29 Minuten und eine Gelierzeit von 10 s.
Das Copolymere entfaltet eine Gleitmittelwirkung wie das in Beispiel 4 genannte zweischalige PVC-Verarbeitungshilfsmittel mit Gleitmittelwirkung, jedoch ohne Verlängerung der Gelierzeit.

Beispiel 6

Da das Molekulargewicht großen Einfluß auf die Eigenschaften von Polymeren und Copolymeren hat, wurde ein Copolymer mit einer VZ verschieden von der in Bsp. 5 geprüft.

In die Rezeptur gemäß Beispiel 3 werden 2 phr eines Copolymeren aus MMA/LMA (80 : 20) eingearbeitet, gemäß dem dort beschriebenen Verfahren. Das Copolymere hat eine Viskositätszahl von 226 ccm/g.

Das Produkt wurde mit dem Walztest geprüft und blieb 27 Minuten auf der Walze ohne anzubacken. Dies zeigt, daß auch das Copolymer der Zusammensetzung MMA/LMA (80 : 20) mit niedrigerer Viskositätszahl, d. h. niedrigem Molekulargewicht, die gleiche Gleitmittelwirkung entfaltet wie das Copolymere aus Bsp. 5. Die Untersuchung der Pulvermischung im Meßkneter zeigt, daß die Gelierzeit dieser Pulvermischung 8 sec beträgt. Die Gelierzeit der Pulvermischung aus Bsp. 6 ist somit noch kürzer als die Gelierzeit der Pulvermischung aus Bsp. 5.

Tabelle 4:

| Beispiel (Nr.) | Typ | Einsatz- menge (Gewichts- teile, phr) | Walztest (min) | Belag (plate-out) | Gelierzeit (s) | Trans- parenz (visuell) |
|---|---|---|---|---|---|---|
| 4 | 2-stufiges E-poly- merisat K 175 | 2 | 28 | stark | 118 | gut |
| | 1-stufiges E-poly- merisat K 120 N | 2 | 10 | stark | 10 | gut |
| 5 | MMA/LMA- Copolymer | 2 | 29 | ohne | 10 | gut |
| 6 | MMA/LMA- Copolymer | 2 | 27 | ohne | 8 | gut |
| 7 | 2-stufiges E-polymerisat | 3 | 28 | stark | 128 | gut |
| 8 | MMA/LMA- Copolymer | 3 | 26 | ohne | 14 | gut |
| 9 | MMA/SMA- Copolymer | 2 | 25 | matt | 104 | trüb |

.
.
.

EP 0 581 009 B1

Die Beispiele 5 und 6 zeigen, daß die erfindungsgemäßen Copolymere Gleitmittelwirkung haben, wie auch bereits kommerzielle mehrstufige PVC-Verarbeitungshilfsmittel mit Gleitmittelwirkung. Die erfindungsgemäßen Copolymere zeigen darüberhinaus in neuartiger und überraschender Weise eine deutlich kürzere Gelierzeit als die zweistufigen Emulsionspolymerisate, haben also nicht die unerwünschte Gelierzeitverlängerung üblicher Gleitmittel.

Beispiel 7 (Vergleich)

Beispiel 4 wurde wiederholt, mit dem Unterschied, daß 3 Gewichtsteile des zweistufigen Emulsionspolymerisates in die Rezeptur gemäß Beispiel 3 eingearbeitet wurden.

Beispiel 8

Beispiel 5 wurde wiederholt, mit dem Unterschied, daß 3 Gewichtsteile des Copolymeren aus Methylmethacrylat und Laurylmethacrylat in die Rezeptur gemäß Beispiel 3 eingearbeitet wurden.
Die Ergebnisse sind in Tabelle 4 dargestellt. Es zeigt sich, daß das MMA/LMA-Copolymer wie das zweistufige Emulsionspolymerisat Gleitmittelwirkung hat. Im Walztest dauert es 26 bzw. 28 Minuten, bis die PVC-Schmelze an der Walze anhaftet. Das Methylmethacrylat/Laurylmethacrylat-Copolymer bewirkt jedoch deutlich schnelleres Gelieren der Rezeptur.

Beispiel 9

Beispiel 5 wurde wiederholt, mit dem Unterschied, daß zwei Gewicht steile eines Copolymers aus Methylmethacrylat und Stearylmethacrylat (Mengenverhältnis Methylmethacrylat zu Stearylmethacrylat = 80 : 20 Gewichtsteile) in die beschriebene Rezeptur eingearbeitet wurden. Die Viskositätszahl des Copolymers ist 192 ccm/g.

Beispiel 10 (Vergleich)

In die Rezeptur gemäß Beispiel 2 wurde nach dem dort beschriebenen Verfahren ein Copolymer aus Methylmethacrylat und Hexylmethacrylat in einer Menge von 4 Gewichtsteilen eingearbeitet. Das Verhältnis Methylmethacrylat zu Hexylmethacrylat beträgt 80 : 20. Die Viskositätszahl als Maß für das Molekulargewicht des Copolymeren beträgt 484 ccm/g.

Beispiel 11

In die Rezeptur gemäß Beispiel 2 wurde nach dem dort beschriebenen Verfahren ein Copolymer aus Methylmethacrylat und Decylmethacrylat in einer Menge von 4 Gewichtsteilen eingearbeitet. Das Mengenverhältnis Methylmethacrylat zu Decylmethacrylat betrug 80 : 20. Die Viskositätszahl als Maß für das Molekulargewicht des Copolymers betrug 310 ccm/g.

Beispiel 12

In die Rezeptur gemäß Beispiel 2 wurde nach dem dort beschriebenen Verfahren das Copolymer aus Bsp. 6 in einer Menge von 4 Gewichtsteilen eingearbeitet. Das Mengenverhältnis Methylmethacrylat zu Laurylmethacrylat beträgt 80 : 20. Die Viskositätszahl des Copolymeren ist 226 ccm/g.

Beispiel 13

In die Rezeptur gemäß Beispiel 2 wurde nach dem dort beschriebenen Verfahren das Copolymer aus Bsp. 9 in einer Menge von 4 Gewichtsteilen eingearbeitet. Das Mengenverhältnis Methylmethacrylat zu Stearylmethacrylat beträgt 80 : 20. Die Viskositätszahl beträgt 192 ccm/g.
Die Gelierzeiten der Prüfrezepturen mit den Copolymeren aus Bsp. 10 bis 13 sind in Tabelle 5 angegeben. Man erkennt, daß das Methylmethacrylat/Laurylmethacrylat-Copolymer die kürzeste Gelierzeit von allen vermessenen Copolymeren hat.

Tabelle 5 :

| Einfluß des Comonomers auf die Gelierzeit bei Meßkneterexperimenten. | | | |
|---|---|---|---|
| Bsp. (Nr.) | Copolymer aus 80 Teilen MMA und 20 Teilen | Viskositätszahl (ccm/g) | Gelierzeit (min) |
| 10 | Hexylmethacrylat | 484 | 3,7 |
| 11 | Decylmethacrylat | 310 | 3,1 |
| 12 | Laurylmethacrylat | 226 | 1,8 |
| 13 | Stearylmethacrylat | 192 | 3,3 |

Beispiel 14 (Vergleich)

In die Rezeptur gemäß Beispiel 2 wurde nach dem dort beschriebenen Verfahren 4 Gewichtsteile eines Copolymer aus Methylmethacrylat und Hexylmethacrylat eingearbeitet. Das Mengenverhältnis Methylmethacrylat zu Hexylmethacrylat beträgt 80 : 20. Die Viskositätszahl ist 650 ccm/g.

Beispiel 15

In die Rezeptur gemäß Beispiel 2 wurde nach dem dort beschriebenen Verfahren 4 Gewichtsteile eines Copolymers aus 80 Teilen MMA und 20 Teilen Laurylmethacrylat eingearbeitet. Die Viskositätszahl des Copolymers beträgt 297 ccm/g.

Beispiel 16

In die Rezeptur gemäß Beispiel 2 wurde nach dem dort beschriebenen Verfahren 4 Gewichtsteile eines Copolymers aus 80 Teilen Methylmethacrylat und 20 Teilen Stearylmethacrylat eingearbeitet. Die Viskositätszahl des Copolymers beträgt 296 ccm/g.

Tabelle 6 :

| Einfluß der Viskositätszahl | | | |
|---|---|---|---|
| Bsp. (Nr.) | Copolymer aus 80 Teilen MMA und 20 Teilen | Viskositätszahl (ccm/g) | Gelierzeit (min) |
| 14 | Hexylmethacrylat | 650 | 5,8 |
| 15 | Laurylmethacrylat | 297 | 2,4 |
| 16 | Stearylmethacrylat | 296 | 4,5 |

In Tabelle 6 hat das Copolymer aus Methylmethacrylat und Laurylmethacrylat wieder die kürzeste Gelierzeit. Ein Vergleich mit Tabelle 5 zeigt, daß bei Copolymeren mit höherem Molekulargewicht (höherer Viskositätszahl) die Gelierzeit länger ist als die der jeweils niedermolekulareren Copolymers.

Beispiel 17

In die Rezeptur gemäß Beispiel 2 wurde nach dem dort beschriebenen Verfahren ein Copolymer aus 90 Teilen Methylmethacrylat und 10 Teilen Laurylmethacrylat in einer Menge von 4 Gewichtsteilen eingearbeitet. Die Viskositätszahl ist 208 ccm/g.

Beispiel 18

In die Rezeptur gemäß Beispiel 2 wurde nach dem dort beschriebenen Verfahren ein Copolymer aus 10 Teilen Laurylmethacrylat und 90 Teilen Methylmethacrylat in einer Menge von 4 Gewichtsteilen eingearbeitet. Die Viskositätszahl dieses Copolymers betrug 322 ccm/g.

Tabelle 7 :

| Einfluß der Comonomermenge auf die Gelierzeit der Copolymere in den Prüfrezepturen | | | | |
|---|---|---|---|---|
| Bsp. | Copolymer | | Viskositätszahl | Gelierzeit |
| (Nr.) | MMA | LMA | (ccm/g) | (min) |
| | (Gewichtsteile, phr) | | | |
| 17 | 90 | 10 | 208 | 3 |
| 12 | 80 | 20 | 226 | 1,8 |
| 18 | 90 | 10 | 322 | 3,6 |
| 15 | 80 | 20 | 297 | 2,4 |

Es ist deutlich erkennbar, daß durch Erhöhung des Anteils an Laurylmethacrylat im Copolymer die Gelierzeit verkürzt wird.

Die Beispiele in Tabelle 7 zeigen, daß auch höhermolekulare Copolymere aus Methylmethacrylat und Laurylmethacrylat kürzere Gelierzeiten der PVC-Prüfrezeptur bewirken. Der Vergleich von Bsp. 17 und Bsp. 18 zeigt, daß Copolymere gleicher Comonomerzusammensetzung, jedoch unterschiedlichen Molekulargewichts, die höhermolekularen Produkte die längere Gelierzeiten haben.

Die erfindungsgemäß eingesetzten Copolymere bieten gegenüber den Verarbeitungsmitteln mit Gleitmittelwirkung, die über zweistufige Emulsionspolymerisation hergestellt werden, kürzere Herstellungszeiten. Bei der zweistufigen Emulsionspolymerisation wird die erste Stufe, der sogenannte Kern, auspolymerisiert. Dann wird in einer zweiten Polymerisationsstufe die sogenannte Schale auf den Kern aufpolymerisiert. Berücksichtigt man noch eine Zwischenreaktionszeit zwischen erster und zweiter Stufe, ergibt sich zwangsläufig eine deutlich längere Gesamtpolymerisationszeit bei der Herstellung des zweistufigen Emulsionspolymerisates.

Die erfindungsgemäß anwendbaren Copolymere, insbesondere auf Basis Methylmethacrylat/ Laurylmethacrylat zeigen auf den Walzen des Prüfwalzwerkes keine oder nur geringe Belagsbildung. Die zweistufigen Emulsionspolymerisate führen zu starker Belagsbildung. Belagsbildung auf Kalanderwalzen, in Düsen und Werkzeugen von Kunststoffverarbeitungsmaschinen ist ein äußerst unerwünschter Effekt, der zu Verringerung der Produktqualität führen kann und zur Unterbrechung des Herstellungsprozesses von Kunststoffprodukten.

Bei der Herstellung von PVC-Folien ergeben die erfindungsgemäß verwendeten Copolymere Folien mit deutlich weniger Stippen und deutlich besserer Transparenz als diejenigen Verarbeitungshilfsmittel mit Gleitmittelwirkung, die über zweistufige Emulsionspolymerisation hergestellt werden.

Die erfindungsgemäß zu verwendenden Copolymere ermöglichen es, äußere Gleitmittel in der jeweiligen PVC-Rezeptur niedrig zu dosieren; dadurch wird plate out verringert.

Die erfindungsgemäß nützlichen Copolymere können als alleinige Verarbeitungshilfsmittel mit Gleitmittelwirkung in PVC-Rezepturen eingesetzt werden, wohingegen die Verarbeitungshilfsmittel mit Gleitmittelwirkung, die zweistufige Emulsionspolymerisate sind, fast immer zusammen mit üblichen Verarbeitungshilfsmitteln eingesetzt werden. Letzteres ist dem Fachmann beim Erstellen von PVC-Rezepturen für viele Einsatzzwecke bekannt. Rezepturen mit weniger Einzelkomponenten bieten Vorteile beim Verwiegen und Vermischen bei der PVC-Dryblend-Herstellung.

**Patentansprüche**

1. Thermoplastische Formmasse enthaltend ein thermoplastisches Polymer aus der Gruppe Polyvinylchlorid, Polyvinylidenchlorid, nachhalogeniertes Polymer und Copolymer auf Basis eines dieser Polymere sowie ein Copolymer, das von dem thermoplastischen Polymer verschieden ist,
   **dadurch gekennzeichnet,**

   - daß das vom thermoplastischen Polymer verschiedene Copolymer als Grundbausteine ein Monomer, das als Homopolymerisat eine $T_g \geq 65$ °C hat, wobei das Molekulargewicht so hoch ist, daß sich bei einer weiteren Erhöhung des Molekulargewichtes praktisch keine Veränderung der $T_g$ ergibt, und zu mindestens 3 bis weniger als 75 Gew.-% ein Comonomer enthält, das eine $C_{10}$-$C_{22}$-Alkylkomponente hat,
   - daß der Anteil der Alkylkomponente eine Transmission des Copolymeren von höchstens 90 % (560 nm, 1 cm) in Ethylacetat bei einer 10 %igen (Gew./Gew.) Lösung bewirkt und
   - daß das Copolymer durch Emulsionspolymerisation erhalten wird,

ausgenommen thermoplastische Formmassen aus Polyvinylchlorid und Copolymer, das als Monomer Vinylchlorid und als Comonomer Acrylsäure-$C_8$-$C_{16}$-ester enthält.

2. Thermoplastische Formmasse nach Anspruch 1,
**dadurch gekennzeichnet,**
daß das Comonomer ausgewählt ist aus der Gruppe (Meth)acrylsäure-$C_{10}$-$C_{22}$-ester, Vinyl-$C_{10}$-$C_{22}$-ether, Vinyl-$C_{10}$-$C_{22}$-ester.

3. Thermoplastische Formmasse nach einem der vorhergehenden Ansprüche,
**dadurch gekennzeichnet,**
daß das Monomer als Homopolymerisat eine $T_g \geq 80$ °C hat.

4. Thermoplastische Formmasse nach einem der vorhergehenden Ansprüche,
**dadurch gekennzeichnet,**
daß das Copolymer eine $T_g \geq 50$ °C hat.

5. Thermoplastische Formmasse nach einem der vorhergehenden Ansprüche,
**dadurch gekennzeichnet,**
daß das Monomer, das als Homopolymerisat eine $T_g \geq 65$ °C hat, ausgewählt ist aus der Gruppe Methylmethacrylat, (Meth)acrylnitril, Styrol, $\alpha$-Methylstyrol, Vinyltoluol.

6. Thermoplastische Formmasse nach einem der vorhergehenden Ansprüche,
**dadurch gekennzeichnet,**
daß die Alkylkomponente 10 - 16 C-Atome, insbesondere 12 - 14 C-Atome, enthält und vorzugsweise linear ist.

7. Thermoplastische Formmasse nach Anspruch 6, **dadurch gekennzeichnet,**
daß die Alkylkomponente linear ist.

8. Thermoplastische Formmasse nach einem der vorhergehenden Ansprüche,
**dadurch gekennzeichnet,**
daß das Copolymer ein Molekulargewicht $M_W \geq 100\ 000$ hat.

9. Thermoplastische Formmasse nach Anspruch 8, **dadurch gekennzeichnet,**
daß das Molekulargewicht $\geq 300\ 000$ ist.

10. Thermoplastische Formmasse nach einem der vorhergehenden Ansprüche,
**dadurch gekennzeichnet,**
daß sie auf 100 Gew.-Teile thermoplastisches Polymer bis zu 20 Gew.-Teile des Copolymers enthält.

11. Thermoplastische Formmasse nach Anspruch 10,
**dadurch gekennzeichnet,**
daß sie bis zu 5 Gew.-Teile des Copolymers enthält.

12. Thermoplastische Formmasse nach einem der vorhergehenden Ansprüche,
**dadurch gekennzeichnet**,
daß das Copolymer in dem thermoplastischen Polymer als Gleit- und Verarbeitungshilfsmittel wirkt.

13. Thermoplastische Formmasse nach einem der vorhergehenden Ansprüche,
**dadurch gekennzeichnet,**
daß das Copolymer ein Thermoplast ist.

14. Thermoplastische Formmasse nach einem der vorhergehenden Ansprüche,
**dadurch gekennzeichnet,**
daß das Copolymer eine Löslichkeit in Ethylacetat von weniger als 3 g/100 g hat.

15. Geformter Artikel aus einer thermoplastischen Formmasse nach einem der vorhergehenden Ansprüche.

16. Geformter Artikel nach Anspruch 15,

**dadurch gekennzeichnet,**
daß er eine Folie ist.

**17.** Geformte Artikel nach Anspruch 16,
**dadurch gekennzeichnet,**
daß die Folie in einem Verbund vorliegt.

**18.** Verfahren zum Verarbeiten eines thermoplastischen Polymers, bei welchem Polyvinylchlorid, Polyvinylidenchlorid, nachhalogeniertes Polymer oder ein Copolymer auf Basis dieser Polymere mit einem Gleit- und Verarbeitungshilfsmittel innig zu einer thermoplastischen Formmasse vermischt und diese in Form gebracht wird,
**dadurch gekennzeichnet,**
daß als Gleit- und Verarbeitungshilfsmittel ein Copolymer eingesetzt wird, das als von dem thermoplastischen Polymer verschiedenes Copolymer in den Ansprüchen 1 bis 14 definiert wird.

**19.** Verfahren nach Anspruch 18,
**dadurch gekennzeichnet,**
daß das Vermischen unter Temperaturerhöhung und Schmelzen des Polymers erfolgt.

**20.** Verfahren nach Anspruch 18 oder 19,
**dadurch gekennzeichnet,**
daß das Vermischen auf einem Walzenstuhl oder in einem Extruder erfolgt.

**Claims**

1. Thermoplastic moulding composition containing a thermoplastic polymer from the group comprising polyvinyl chloride, polyvinylidene chloride, post-halogenated polymer and copolymer based on one of these polymers together with a copolymer other than the thermoplastic polymer,
characterised in that

   - the copolymer other than the thermoplastic polymer contains as its basic units a monomer which has a $T_g$ of $\geq 65°C$ as a homopolymer, wherein the molecular weight is so high that there is virtually no change in $T_g$ in the event of any further increase in molecular weight, and contains at least 3 to less than 75 wt.% of a comonomer having a $C_{10}$-$C_{22}$ alkyl component,
   - the alkyl component fraction brings about a transmission of the copolymer of at most 90% (560 nm, 1 cm) in ethyl acetate in a 10% (wt./wt.) solution and
   - the copolymer is obtained by emulsion polymerisation,

   with the exception of thermoplastic moulding compositions prepared from polyvinyl chloride and copolymer which contains vinyl chloride as the monomer and acrylic acid $C_8$-$C_{16}$ esters as the comonomer.

2. Thermoplastic moulding composition according to claim 1,
   characterised in that
   the comonomer is selected from the group comprising (meth)acrylic acid $C_{10}$-$C_{22}$ esters, vinyl $C_{10}$-$C_{22}$ ethers, vinyl $C_{10}$-$C_{22}$ esters.

3. Thermoplastic moulding composition according to one of the preceding claims,
   characterised in that
   the monomer has a $T_g$ of $\geq 80°C$ as a homopolymer.

4. Thermoplastic moulding composition according to one of the preceding claims,
   characterised in that
   the copolymer has a $T_g$ of $\geq 50°C$.

5. Thermoplastic moulding composition according to one of the preceding claims,
   characterised in that
   the monomer, which has a $T_g$ of $\geq 65°C$ as a homopolymer, is selected from the group comprising methyl methacrylate, (meth)acrylonitrile, styrene, $\alpha$-methylstyrene, vinyltoluene.

**6.** Thermoplastic moulding composition according to one of the preceding claims,
characterised in that
the alkyl component contains 10-16 C atoms, in particular 12-14 C atoms, and is preferably linear.

**7.** Thermoplastic moulding composition according to claim 6,
characterised in that
the alkyl component is linear.

**8.** Thermoplastic moulding composition according to one of the preceding claims,
characterised in that
the copolymer has a molecular weight $M_w$ of $\geq$ 100000.

**9.** Thermoplastic moulding composition according to claim 8,
characterised in that
the molecular weight is $\geq$ 300000.

**10.** Thermoplastic moulding composition according to one of the preceding claims,
characterised in that
it contains up to 20 parts by weight of the copolymer per 100 parts by weight of thermoplastic polymer.

**11.** Thermoplastic moulding composition according to claim 10,
characterised in that
it contains up to 5 parts by weight of the copolymer.

**12.** Thermoplastic moulding composition according to one of the preceding claims,
characterised in that
the copolymer acts as a lubricant and processing auxiliary in the thermoplastic polymer.

**13.** Thermoplastic moulding composition according to one of the preceding claims,
characterised in that
the copolymer is a thermoplastic.

**14.** Thermoplastic moulding composition according to one of the preceding claims,
characterised in that
the copolymer has a solubility in ethyl acetate of less than 3 g/100 g.

**15.** Shaped article made from a thermoplastic moulding composition according to one of the preceding claims.

**16.** Shaped article according to claim 15,
characterised in that
it is a film.

**17.** Shaped article according to claim 16,
characterised in that
the film is a component in a composite.

**18.** Process for processing a thermoplastic polymer in which polyvinyl chloride, polyvinylidene chloride, post-halogenated polymer or a copolymer based on these polymers is intimately mixed with a lubricant and processing auxiliary to yield a thermoplastic moulding composition and this composition is shaped,
characterised in that
the lubricant and auxiliary used is a copolymer which is defined in claims 1 to 14 as the copolymer other than the thermoplastic polymer.

**19.** Process according to claim 18,
characterised in that
mixing is performed with an increase in temperature and fusion of the polymer.

**20.** Process according to claim 18 or 19,

EP 0 581 009 B1

characterised in that
mixing is performed on a roll mill or in an extruder.

**Revendications**

1.  Formes moulées thermoplastiques contenant un polymère thermoplastique choisi dans le groupe du chlorure de polyvinyle, du chlorure de polyvinylidène, de polymère ré-halogéné, et de copolymère à base d'un de ces polymères ainsi que d'un copolymère qui est différent du polymère thermoplastique,
    caractérisées en ce que

    - le copolymère différent du polymère thermoplastique en tant que base d'éléments constitutifs, est un monomère qui a comme homopolymérisat un $Tg \geq 65°C$, pour lequel le poids moléculaire est si élevé qu'il ne se produit pour une élévation supplémentaire du poids moléculaire pratiquement aucune modification du Tg, et qui renferme pour au moins 3 à moins de 75 % en poids, un comonomère qui a un composant alkyle en $C_{10}$ à $C_{22}$,
    - la proportion des composants alkyle entraîne une transmission du copolymère d'au plus 90 % (560 nm, 1 cm) dans l'acétate d'éthyle pour une solution à 10 % (poids/poids), et
    - le copolymère est obtenu par polymérisation en émulsion à l'exception des masses moulées thermoplastiques à base de chlorure de polyvinyle et de copolymère qui renferme comme monomère, du chlorure de vinyle et comme comonomère un ester en $C_8$-$C_{16}$ d'acide acrylique.

2.  Masses moulées thermoplastiques selon la revendication 1,
    caractérisées en ce que
    le comonomère est choisi dans le groupe formé d'un ester en $C_{10}$-$C_{22}$ de l'acide (meth)acrylique, un éther vinylique en $C_{10}$ à $C_{22}$, un ester de vinyle en $C_{10}$ à $C_{22}$.

3.  Masses moulées thermoplastiques selon l'une des revendications précédentes,
    caractérisées en ce que
    le monomère a en tant qu'homopolymérisat un $Tg \geq 80°C$.

4.  Masses moulées thermoplastiques selon l'une des revendications précédentes,
    caractérisées en ce que
    le copolymère a un $Tg \geq 50°C$.

5.  Masses moulées thermoplastiques selon l'une des revendications précédentes,
    caractérisées en ce que
    le monomère qui a comme homopolymérisat un $Tg \geq 65°C$, est choisi dans le groupe formé du méthacrylate de méthyle, du (meth)acrylonitrile, du styrène, de l'$\alpha$-méthylstyrène, et du vinyltoluène.

6.  Masses moulées thermoplastiques selon l'une des revendications précédentes,
    caractérisées en ce que
    le composant alkyle renferme 10-16 atomes de carbone, en particulier 12-14 atomes de carbone et est de préférence linéaire.

7.  Masses moulées thermoplastiques selon la revendication 6,
    caractérisées en ce que
    le composant alkyle est linéaire.

8.  Masses moulées thermoplastiques selon l'une des revendications précédentes,
    caractérisées en ce que
    le copolymère a un poids moléculaire $M_W \geq 100.000$.

9.  Masses moulées thermoplastiques selon la revendication 8,
    caractérisées en ce que
    le poids moléculaire est $\geq 300.000$.

10. Masse moulée thermoplastique selon l'une des revendications précédentes,

16

caractérisée en ce qu'
elle renferme pour 100 parties en poids de polymère thermoplastique, jusqu'à 20 parties en poids de copolymère.

11. Masse moulée thermoplastique selon la revendication 10,
caractérisée en ce qu'
elle renferme jusqu'à 5 parties en poids de copolymère.

12. Masse moulée thermoplastique selon l'une des revendications précédentes,
caractérisée en ce qu'
le copolymère dans le polymère thermoplastique agit comme adjuvant de glissement et comme agent qui facilite le façonnage.

13. Masse moulée thermoplastique selon l'une des revendications précédentes,
caractérisée en ce que
le copolymère est un thermoplaste.

14. Masse moulée thermoplastique selon l'une des revendications précédentes,
caractérisée en ce que
le copolymère a une solubilité dans l'acétate d'éthyle de moins de 3 g/100 g.

15. Article moulé à partir d'une masse moulée thermoplastique selon l'une des revendications précédentes.

16. Article moulé selon la revendication 15,
caractérisé en ce qu'
il est une feuille.

17. Article moulé selon la revendication 16,
caractérisé en ce que
la feuille se présente dans un composite.

18. Procédé de façonnage d'un polymère thermoplastique dans lequel du chlorure de polyvinyle, du chlorure de polyvinylidène, un polymère ré-halogéné, ou un copolymère à base de ce polymère avec un agent qui facilite le
façonnage et avec un adjuvant de glissement, est mélangé intimement à une masse moulée thermoplastique et
celle-ci est amenée en forme,
caractérisé en ce que
comme adjuvant de glissement et agent facilitant le façonnage, on met en oeuvre un copolymère qui est défini
comme copolymère différent du polymère thermoplastique dans les revendications 1 à 14.

19. Procédé selon la revendication 18,
caractérisé en ce que
le mélange s'effectue sous élévation de température et fusion du polymère.

20. Procédé selon la revendication 18 ou la revendication 19,
caractérisé en ce que
le mélange s'effectue sur un broyeur à cylindres ou dans une extrudeuse.